# EUROPEAN PATENT APPLICATION

(11) **EP 2 930 894 A1**
(43) Date of publication of application: **14.10.2015**
(21) Application number: 15153934.3
(22) Date of filing: 05.02.2015
(51) Int. Cl.: H04L 12/851, H04L 12/853, H04L 12/803

(54) **Communication apparatus and transmitting method**

(30) Priority: 08.04.2014 JP 2014079474
(71) Applicant: Kabushiki Kaisha Toshiba, Tokyo 105-8001 (JP)
(72) Inventor: Inaba, Hidekazu, Tokyo, 105-8001 (JP)
(74) Representative: Hoffmann Eitle

(57) **Abstract**

According to some embodiments, a communication apparatus has a determiner, a protocol processor, and a physical interface. The determiner sets a transmission priority for transmitting transmit data to another apparatus in accordance with a size of the transmit data. The protocol processor generates a packet including the transmit data based on a predetermined protocol. The physical interface transmits the packet including the transmit data in accordance with the transmission priority which was set for the transmit data.

## Description

### CROSS-REFERENCE TO RELATED APPLICATIONS

This application is based upon and claims the benefit of priority from Japanese Patent Application No. 2014-079474, filed April 8, 2014; the entire contents of which are incorporated herein by reference.

### FIELD

Embodiments described herein relate generally to a communication apparatus and a transmitting method.

### BACKGROUND

There are situations in which a server apparatus executes a part of processing related to communication with a client apparatus by means of hardware processing so as to reduce a communication processing load which has been primarily executed by means of software processing. However, there have been situations in which a communication apparatus at a server apparatus have been unable to improve communication performance.

### BRIEF DESCRIPTION OF THE DRAWINGS

FIG. 1 is a drawing showing an exemplary constitution of a communication system in accordance with an embodiment.
FIG. 2 is a drawing showing an exemplary communication of packets in accordance with an embodiment.
FIG. 3 is a flowchart showing an exemplary operation of a communicator in accordance with an embodiment.
FIG. 4 is a sequence diagram showing an exemplary communication in accordance with an embodiment in which packets are transmitted in a situation in which priority of transmit data is not set by communicator.
FIG. 5 is a sequence diagram showing an exemplary communication in accordance with an embodiment in which packets are transmitted in a situation in which priority of transmit data is set by communicator.
FIG. 6 is a sequence diagram showing an exemplary communication in accordance with an embodiment in which connections are established in a situation in which priority of transmit data is not set by communicator.
FIG. 7 is a sequence diagram showing an exemplary communication in accordance with an embodiment in which connections are established in a situation in which priority of transmit data is set by communicator.

### DETAILED DESCRIPTION

According to some embodiments, a communication apparatus has a determiner, a protocol processor, and a physical interface. The determiner sets a transmission priority for transmitting transmit data to another apparatus in accordance with a size of the transmit data. The protocol processor generates a packet including the transmit data based on a predetermined protocol. The physical interface that transmits the packet including the transmit data in accordance with the transmission priority which was set for the transmit data.

Embodiments of a communication apparatus and a transmitting method will be described below, with references made to the drawings.

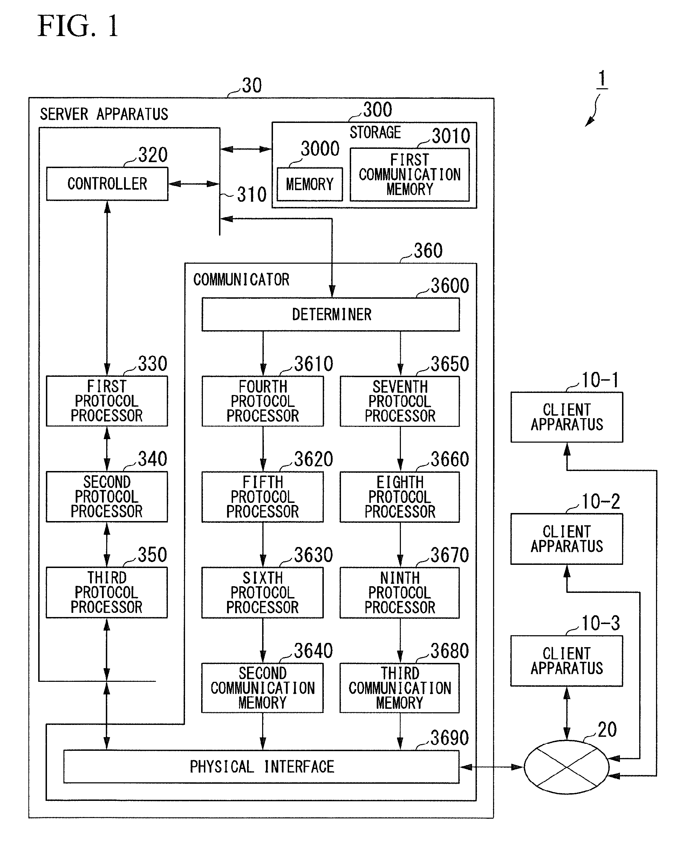

FIG. 1 is a drawing showing an exemplary constitution of a communication system 1 in accordance with an embodiment. A communication system 1 is equipped with a client apparatus 10, a communication network 20, and a server apparatus 30.

The client apparatus 10 communicates with the server apparatus 30 by way of the communication network 20. The client apparatus 10 includes client apparatuses 10-1, 10-2, and 10-3. The communication network 20 mediates a communication between the client apparatus 10 and the server apparatus 30. The server apparatus 30 communicates with the client apparatus 10 by way of the communication network 20. Hereinbelow, data transmitted to another apparatus is referred to as "transmit data".

The transmit data might, for example, be data saved by the server apparatus 30 or data generated by the server apparatus 30. The server apparatus 30 transmits the transmit data to the client apparatus 10 in response to a packet received from the client apparatus 10.

An exemplary constitution of the server apparatus 30 will next be described. The server apparatus 30 is equipped with storage 300, a bus 310, a controller 320, a first protocol processor 330, a second protocol processor 340, a third protocol processor 350, and a communicator 360.

The storage 300 might be RAM (Random Access Memory), a register and/or another such volatile memory, and/or ROM (Read Only Memory), flash memory, a hard disk drive, and/or another such nonvolatile memory. The storage 300 is equipped with a memory 3000 and a first communication memory 3010. The memory 3000 stores various types of data. The memory 3000 might, for example, store image information representing moving images, image information representing still images, and audio information representing audio. The memory 3000 might, for example, store a program (application program) for causing an operation of a CPU and/or another such processor. The memory 3000 may store data generated by the controller 320 based on the program.

The first communication memory 3010 functions as a communication queue. The first communication memory 3010 stores packets including the transmit data. A packet including the transmit data might, for example, be a control packet including control information, an image data packet including image data, and/or an audio data packet including audio data.

The bus 310 is a communication network. The bus 310 connects the storage 300, the controller 320, the third protocol processor 350, and the communicator 360 so as to permit communication thereamong.

All or any part of the controller 320, the first protocol processor 330, the second protocol processor 340, and the third protocol processor 350 may constitute software functional units which might, for example, be made to function as a result of execution by a CPU (Central Processing Unit) and/or another such processor of the program stored in the memory 3000.

The controller 320 executes the software processing in an application layer based on an application program. The controller 320 generates the transmit data as a result of the software processing. The control information which is used for control is generated by the controller 320 in the form of the transmit data. The controller 320 causes the transmit data which has been generated to be stored at the memory 3000 by way of the bus 310.

The controller 320 routes the transmit data based on a hook incorporated in the application program. By routing the transmit data, the controller 320 causes the communication processing to be divided into a branch in which processing for assembly of the transmit data into packets is carried out by means of hardware processing and a branch in which processing for assembly of the transmit data into packets is carried out by means of the software processing. When the transmit data is assembled into packets by means of the hardware processing at the communicator 360, the software processing load on the controller 320, the first protocol processor 330, the second protocol processor 340, and the third protocol processor 350 is reduced.

When communication processing is to be executed by means of the hardware processing, the controller 320 outputs address information to the communicator 360 by way of the bus 310. This address information is information indicating an address at which the transmit data is stored in the memory 3000. Software sockets and hardware are tied together by the address information. Furthermore, when the communication processing at the controller 320 is to be divided into branches by means of a hook, the controller 320 outputs size information indicating a size of the transmit data to the communicator 360 by way of the bus 310. On the other hand, when the communication processing is to be executed by means of the software processing, the controller 320 causes the first protocol processor 330, the second protocol processor 340, and the third protocol processor 350 to generate packets including the transmit data.

Furthermore, the controller 320 obtains data (hereinafter "receive data") from the first protocol processor 330 in correspondence to packets received from the client apparatus 10. The receive data might, for example, include control information for requesting that the server apparatus 30 transmit packets. The controller 320 executes prescribed processing in response to the receive data obtained from the first protocol processor 330.

The first protocol processor 330 causes the transmit data obtained from the controller 320 to be subjected to encoding processing based on a first protocol. The first protocol might, for example, be a protocol defined with respect to a transport layer. The transmit data which has been subjected to the encoding processing based on the first protocol is output from the first protocol processor 330 to the second protocol processor 340.

Furthermore, the first protocol processor 330 obtains the receive data from the second protocol processor 340. The first protocol processor 330 causes the receive data obtained from the second protocol processor 340 to be subjected to decoding processing based on the first protocol. The receive data which has been subjected to the decoding processing based on the first protocol is output from the first protocol processor 330 to the controller 320.

The second protocol processor 340 causes the transmit data obtained from the first protocol processor 330 to be subjected to encoding processing based on a second protocol. The second protocol might, for example, be a protocol defined with respect to an internet layer. The transmit data which has been subjected to the encoding processing based on the second protocol is output from the second protocol processor 340 to the third protocol processor 350.

The second protocol processor 340 obtains the receive data from the third protocol processor 350. The second protocol processor 340 causes the receive data obtained from the third protocol processor 350 to be subjected to decoding processing based on the second protocol. The receive data which has been subjected to the decoding processing based on the second protocol is output from the second protocol processor 340 to the first protocol processor 330.

The third protocol processor 350 causes the transmit data obtained from the second protocol processor 340 to be subjected to encoding processing based on a third protocol, and generates the packets including the transmit data. The third protocol might, for example, be a protocol defined with respect to a network interface layer. The third protocol processor 350 causes the packets including the transmit data to be stored at the first communication memory 3010.

Furthermore, the third protocol processor 350 obtains a receive signal from the first communication memory 3010. The third protocol processor 350 causes the receive data obtained from the first communication memory 3010 to be subjected to decoding processing based on the third protocol. The receive data which has been subjected to the decoding processing based on the third protocol is output from the third protocol processor 350 to the second protocol processor 340.

The communicator 360 executes a load reduction processing (offload processing) to reduce load corresponding to the communication processing at the controller 320 and/or the like. In other words, at least a part of the TCP/IP protocol processing which would otherwise have been executed by the controller 320 and/or the like, instead of being executed by the controller 320 and/or the like, is executed by means of the hardware processing by the communicator 360.

The communicator 360 obtains the address information from the controller 320 by way of the bus 310. The communicator 360 obtains the transmit data from the memory 3000 based on the address information. The communicator 360 generates packets including the transmit data which was obtained, and transmits the generated packets to the client apparatus 10.

An exemplary constitution of the communicator 360 will next be described. The communicator 360 is equipped with a determiner 3600, a fourth protocol processor 3610, a fifth protocol processor 3620, a sixth protocol processor 3630, a second communication memory 3640, a seventh protocol processor 3650, an eighth protocol processor 3660, a ninth protocol processor 3670, and a third communication memory 3680.

All or any part of the functional units at the communicator 360 may constitute an LSI (Large Scale Integration), an ASIC (Application Specific Integrated Circuit), memory, and/or another such hardware functional unit. In other words, all or any part of the functional units at the communicator 360 may have circuitry which functions without use of a program.

When the address information has been obtained from the controller 320, the determiner 3600 obtains the transmit data, in an amount as indicated by the size information, from the storage area in the memory 3000 beginning at the location indicated by the address information.

The determiner 3600 sets a transmission priority of the transmit data which was obtained from the memory 3000 so as to cause a packet including the transmit data of relatively small size to be transmitted in prioritized fashion by a physical interface 3690. In other words, the determiner 3600 gives a higher transmission priority to the transmit data having a smaller size. It is often the case that the control information is of smaller size than the image information or the audio information. For this reason, the determiner 3600 is able to set the transmission priority of the transmit data which was obtained from the memory 3000 so as to cause the physical interface 3690 to transmit the control packet with higher transmission priority than the data packet.

Note that the determiner 3600 may also set the transmission priority of the transmit data more finely than this in accordance with a type of the transmit data. For example, the determiner 3600 may set the transmission priority of a transmitted packet such that the packet of the response message "ACK" is given higher transmission priority than the packet of a data packet "OK" including a response message from the application.

The determiner 3600 evaluates whether the size of the control information or other such the transmit data obtained from the memory 3000 is greater than or equal to a predetermined threshold value. In other words, the determiner 3600 evaluates whether the size indicated by the size information which was obtained is greater than or equal to the predetermined threshold value. The threshold value might, for example, be 128 bytes. The threshold value might, for example, be stored at the memory 3000.

The processors with which the communicator 360 is equipped for executing processing based on predetermined protocols are divided into a first subunit and a second subunit. The first subunit is the subunit which includes the fourth protocol processor 3610, the fifth protocol processor 3620, the sixth protocol processor 3630, and the second communication memory 3640. Furthermore, the second subunit is the subunit which includes the seventh protocol processor 3650, the eighth protocol processor 3660, the ninth protocol processor 3670, and the third communication memory 3680. Packets generated by the second subunit are transmitted to the client apparatus 10 with higher transmission priority than packets generated by the first subunit.

Note that the first subunit and the second subunit need not be physically separate subunits. For example, the first subunit and the second subunit may constitute the same physical circuitry, logical multiplexing of processing permitting generation of packets to be handled differently for different priorities.

In the event that the size indicated by the size information is greater than or equal to the threshold value, the transmit data which was obtained from the memory 3000 is output from the determiner 3600 to the fourth protocol processor 3610 of the first subunit. Conversely, in the event that the size indicated by the size information is not greater than or equal to the threshold value, the transmit data which was obtained from the memory 3000 is output from the determiner 3600 to the seventh protocol processor 3650 of the second subunit.

The fourth protocol processor 3610 of the first subunit causes the transmit data obtained from the determiner 3600 to be subjected to encoding processing based on the first protocol. The transmit data which has been subjected to the encoding processing based on the first protocol is output from the fourth protocol processor 3610 to the fifth protocol processor 3620.

The fifth protocol processor 3620 of the first subunit causes the transmit data obtained from the fourth protocol processor 3610 to be subjected to encoding processing based on the second protocol. The transmit data which has been subjected to the encoding processing based on the second protocol is output from the fifth protocol processor 3620 to the sixth protocol processor 3630.

The sixth protocol processor 3630 of the first subunit causes the transmit data obtained from the fifth protocol processor 3620 to be subjected to encoding processing based on the third protocol, and generates the packets including the transmit data. The sixth protocol processor 3630 causes the packets including the transmit data to be stored at the second communication memory 3640. The second communication memory 3640 of the first subunit stores the packets generated by the sixth protocol processor 3630.

The seventh protocol processor 3650 of the second subunit causes the transmit data obtained from the determiner 3600 to be subjected to encoding processing based on the first protocol. The transmit data which has been subjected to the encoding processing based on the first protocol is output from the seventh protocol processor 3650 to the eighth protocol processor 3660.

The eighth protocol processor 3660 of the second subunit causes the transmit data obtained from the seventh protocol processor 3650 to be subjected to encoding processing based on the second protocol. The transmit data which has been subjected to the encoding processing based on the second protocol is output from the eighth protocol processor 3660 to the ninth protocol processor 3670.

The ninth protocol processor 3670 of the second subunit causes the transmit data obtained from the eighth protocol processor 3660 to be subjected to encoding processing based on the third protocol, and generates the packets including the transmit data. The ninth protocol processor 3670 causes the packets including the transmit data to be stored at the third communication memory 3680. The third communication memory 3680 of the second subunit stores the packets generated by the ninth protocol processor 3670.

The packets stored at the third communication memory 3680 are transmitted to the client apparatus 10 by the physical interface 3690 with higher transmission priority than the packets stored at the first communication memory 3010 or the packets stored at the second communication memory 3640. The physical interface 3690 might, for example, execute the communication processing within a Media Access Control (MAC) layer. The packets stored at the first communication memory 3010 and the packets stored at the second communication memory 3640 may be transmitted with the same transmission priority or may be transmitted with different priorities by the physical interface 3690. The first communication memory 3010, the second communication memory 3640, and the third communication memory 3680 are hereinafter collectively referred to as a "communication queue".

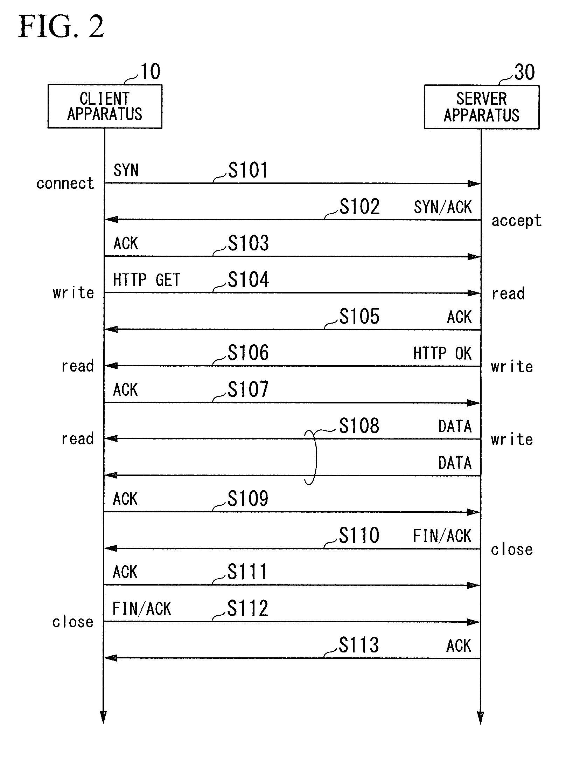

An exemplary operation of the communicator 360 will next be described. FIG. 2 shows an exemplary communication of packets in accordance with an embodiment. The client apparatus 10 transmits a control packet "SYN" to the server apparatus 30 (step S101). The control packet "SYN" is a packet including data used in the context of control for establishing the communication connection.

To accept the communication connection, the server apparatus 30 transmits, to the client apparatus 10, the control packet "SYN", and a message "ACK" which is responsive to the control packet "SYN" that was received (step S102). The client apparatus 10 transmits, to the server apparatus 30, the message "ACK" which is responsive to the control packet "SYN" that was received (step S103). This makes it possible for the server apparatus 30 to communicate with the client apparatus 10.

The client apparatus 10 writes the message "HTTP GET" requesting a communication in accordance with a HyperText Transfer Protocol (HTTP) to a communication memory at the client apparatus 10, and transmits same to the server apparatus 30. The server apparatus 30 reads the request message "HTTP GET" from the first communication memory 3010 (step S104). The request message "HTTP GET" is a packet including data requesting that the application executed by the controller 320 should transmit the data packet. The server apparatus 30 transmits, to the client apparatus 10, the message "ACK" which is responsive to the message "HTTP GET" that was received (step S105).

The server apparatus 30 writes the request message "HTTP OK" to the third communication memory 3680, and transmits same to the client apparatus 10. The client apparatus 10 reads the request message "HTTP OK" from the communication memory at the client apparatus 10 (step S 106). The client apparatus 10 transmits, to the server apparatus 30, the message "ACK" which is responsive to the request message "HTTP OK" that was received (step S107).

The server apparatus 30 writes the requested data packets "DATA" to the first communication memory 3010 or the second communication memory 3640, and transmits same to the client apparatus 10. The client apparatus 10 reads the data packets "DATA" from the communication memory at the client apparatus 10 (step S108). The client apparatus 10 transmits, to the server apparatus 30, the message "ACK" which is responsive to the received data packets "DATA" (step S109).

The server apparatus 30 transmits the control packet "FIN/ACK" to the client apparatus 10 (step S110). The control packet "FIN/ACK" is a packet including data causing the communication connection to be closed. The client apparatus 10 transmits, to the server apparatus 30, the message "ACK" which is responsive to the control packet "FIN/ACK" that was received (step S111).

The client apparatus 10 transmits the control packet "FIN/ACK" to the server apparatus 30 (step S112). The server apparatus 30 transmits, to the client apparatus 10, the message "ACK" which is responsive to the control packet "FIN/ACK" that was received (step S113). As a result, the server apparatus 30 closes the connection with the client apparatus 10.

In the example shown in FIG. 2, note that the location at which write processing "write" might instead be transmit processing "send", and a hook may be other than TCP/IP communication processing. Furthermore, a hook at the application program may be such that different priorities are set at the transmit data for "write" transmit processing from the memory to a file descriptor, and for file transmit processing "sendfile" between or among the file descriptor. Furthermore, different priorities may be set for the image information and/or the like included within the data packets, and for the control information included within the control packets.

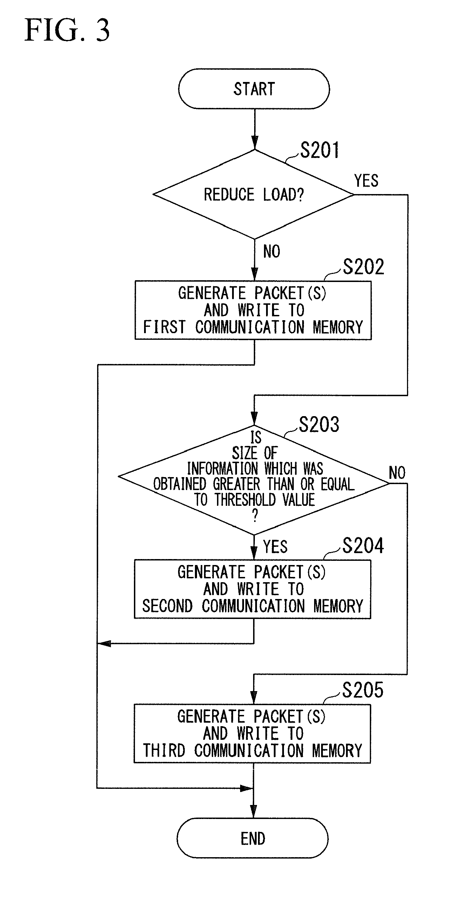

FIG. 3 is a flowchart showing an exemplary operation of a communicator 360 in accordance with an embodiment. The controller 320 evaluates whether a load corresponding to the communication processing executed by means of the software processing is to be reduced based on a hook incorporated within the application program (step S201).

In the event that the communication processing load is not to be reduced (step S201: NO), the first protocol processor 330 executes processing in accordance with a protocol affecting a transport layer (TCP layer) on the transmit data obtained from the controller 320. The second protocol processor 340 executes processing in accordance with a protocol affecting an internet layer (IP layer) on the transmit data obtained from the first protocol processor 330.

The third protocol processor 350 executes processing in accordance with a protocol affecting a network interface layer on the transmit data obtained from the second protocol processor 340, and generates the packets including the transmit data. The third protocol processor 350 causes the generated packets to be stored at the first communication memory 3010 (step S202).

In the event that the communication processing load is to be reduced (step S201: YES), the controller 320 causes the address information indicating the address at the beginning of the storage area at which the transmit data is stored to be transmitted to the determiner 3600 of the communicator 360.

The determiner 3600 obtains the address information from the controller 320. The determiner 3600 employs the hardware processing to obtain the transmit data stored at the memory 3000 based on the address information. The determiner 3600 evaluates whether the size of the transmit data obtained from the memory 3000 is greater than or equal to a predetermined threshold value (step S203).

In the event that the size of the transmit data which was obtained is greater than or equal to the threshold value (step S203: YES), the transmit data which was obtained from the memory 3000 is output from the determiner 3600 to the fourth protocol processor 3610. The fourth protocol processor 3610 executes processing in accordance with a protocol affecting the transport layer (TCP layer) on the transmit data obtained from the determiner 3600. The fifth protocol processor 3620 executes processing in accordance with a protocol affecting an internet layer (IP layer) on the transmit data obtained from the fourth protocol processor 3610.

The sixth protocol processor 3630 executes processing in accordance with a protocol affecting a network interface layer on the transmit data obtained from the fifth protocol processor 3620, and generates the packets including the transmit data. The sixth protocol processor 3630 causes the generated packets to be stored at the second communication memory 3640 (step S204).

Conversely, in the event that the size of the transmit data which was obtained is not greater than or equal to the threshold value (step S203: NO), the transmit data which was obtained from the memory 3000 is output from the determiner 3600 to the seventh protocol processor 3650. The seventh protocol processor 3650 executes processing in accordance with a protocol affecting the transport layer (TCP layer) on the transmit data obtained from the determiner 3600. The eighth protocol processor 3660 executes processing in accordance with a protocol affecting an internet layer (IP layer) on the transmit data obtained from the seventh protocol processor 3650.

The ninth protocol processor 3670 executes processing in accordance with a protocol affecting a network interface layer on the transmit data obtained from the eighth protocol processor 3660, and generates the packets including the transmit data. The sixth protocol processor 3630 causes the generated packets to be stored at the third communication memory 3680 (step S205). It is often the case that the control information is of smaller size than image information or audio information. For this reason, the third communication memory 3680 stores the packets including the control information.

A packet stored at the third communication memory 3680 is transmitted to the client apparatus 10 by the physical interface 3690 with higher transmission priority than a packet stored at the first communication memory 3010 or a packet stored at the second communication memory 3640.

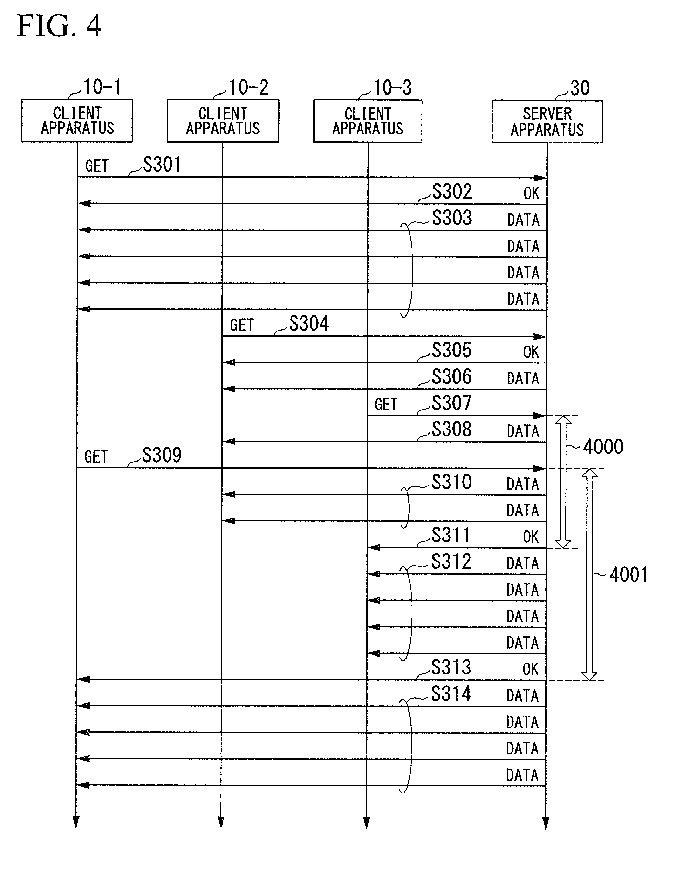

FIG. 4 is a sequence diagram showing an exemplary communication in accordance with an embodiment in which packets are transmitted in a situation in which the transmission priority of the transmit data is not set by the communicator 360. There are situations in which the server apparatus 30 might engage in a TCP/IP (Transmission Control Protocol/Internet Protocol) communication with a plurality of the client apparatuses 10. At FIG. 4, as one example, the server apparatus 30 carries out the TCP/IP communication with the client apparatuses 10-1 through 10-3. Examples of communication in accordance with the HyperText Transfer Protocol shown in FIG. 4 include transmission of control packets "GET", and transmission of the data packets "DATA" corresponding to the control packet "GET", by the server apparatus 30.

At FIG. 4 through FIG. 7, note that items related to the control packets for the data packets are omitted for convenience of description.

The data packets "DATA" are packets which, while they do not include the control information, instead include predetermined information. The predetermined information might, for example, be image information representing moving images, image information representing still images, and/or audio information representing audio.

The client apparatus 10-1 transmits a control packet "GET" to the server apparatus 30 (step S301). The server apparatus 30 transmits, to the client apparatus 10-1, a data packet "OK" including a response message responsive to the control packet "GET" (step S302). The server apparatus 30 transmits, to the client apparatus 10-1, the data packets "DATA" corresponding to the control packet "GET" (step S303).

At FIG. 4, neither the client apparatus 10-2 nor the client apparatus 10-3 transmits the control packet to the server apparatus 30 during the period from step S301 to step S303. For this reason, the server apparatus 30 is able to transmit the data packets "DATA" to the client apparatus 10-1 without delay.

The client apparatus 10-2 transmits the control packet "GET" to the server apparatus 30 (step S304). The server apparatus 30 transmits, to the client apparatus 10-2, the data packet "OK" including a response message responsive to the control packet "GET" (step S305). The server apparatus 30 transmits, to the client apparatus 10-2, the data packets "DATA" corresponding to the control packet "GET" (step S306).

FIG. 4 shows a situation in which, following the transmission of the data packets "DATA" by the server apparatus 30 at step S306, the client apparatus 10-3 transmits the control packet "GET" to the server apparatus 30 while in a state in which untransmitted data packets remain in the communication queue at the server apparatus 30 (step S307). The server apparatus 30 continues to transmit, to the client apparatus 10-2, the data packets "DATA" stored in the communication queue without setting of the transmission priority (step S308).

FIG. 4 shows a situation in which, following the transmission of the data packets "DATA" by the server apparatus 30 at step S308, the client apparatus 10-1 transmits the control packet "GET" to the server apparatus 30 while in a state in which the untransmitted data packets remain in the communication queue at the server apparatus 30 (step S309). The server apparatus 30 continues to transmit, to the client apparatus 10-2, the data packets "DATA" stored in the communication queue without setting of the transmission priority (step S310).

In the event that the transmission to the client apparatus 10-2 of the data packets "DATA" stored in the communication queue is completed, the server apparatus 30 transmits, to the client apparatus 10-3, the data packet "OK" including a response message corresponding to the control packet "GET" (step S311). The length of time from step S307 to step S311 is indicated by the length of an arrow 4000. The server apparatus 30 transmits, to the client apparatus 10-3, the data packets "DATA" stored in the communication queue without setting of the transmission priority (step S312).

In the event that transmission to the client apparatus 10-3 of the data packets "DATA" stored in the communication queue is completed, the server apparatus 30 transmits, to the client apparatus 10-1, the data packet "OK" including a response message corresponding to the control packet "GET" (step S313). The length of time from step S309 to step S313 is indicated by the length of an arrow 4001. The server apparatus 30 transmits, to the client apparatus 10-1, the data packets "DATA" stored in the communication queue without setting of the transmission priority (step S314).

As shown in FIG. 4, when the server apparatus 30 transmits packets without setting of the transmission priority of the transmit data, situations can arise in which the transmission of the control packets is delayed. At FIG. 4, between step S307 and step S311, there is occurrence of a delay in the transmission of the data packet "OK" including a response message. Furthermore, between step S309 and step S313, there is occurrence of a delay in the transmission of the data packet "OK" including a response message.

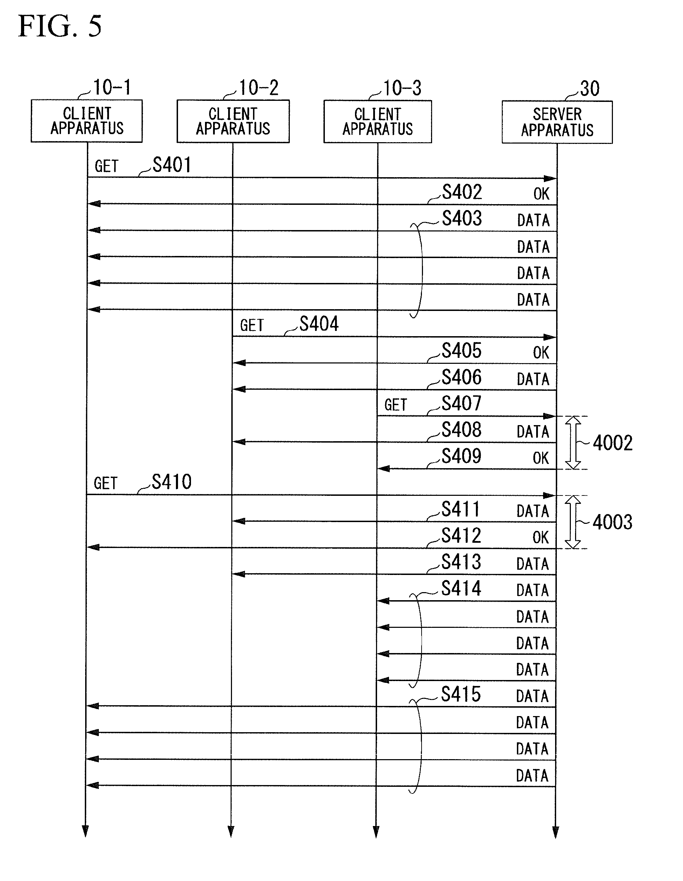

FIG. 5 is a sequence diagram showing an exemplary communication in accordance with an embodiment in which packets are transmitted in a situation in which the transmission priority of the transmit data is set by the communicator 360. At FIG. 5, the control packets are stored at the third communication memory 3680. At FIG. 5, the packets stored at the third communication memory 3680 are transmitted in prioritized fashion by the server apparatus 30.

Step S401 through step S408 are similar to step S301 through step S308 shown in FIG. 4. The data packet "OK" including a response message stored at the third communication memory 3680 is transmitted in prioritized fashion to the client apparatus 10-3 by the server apparatus 30 (step S409). The length of time from step S407 to step S409 is indicated by the length of an arrow 4002.

FIG. 5 shows a situation in which, immediately after transmission of the data packet "OK" including a response message by the server apparatus 30 at step S409, the client apparatus 10-1 transmits the control packet "GET" to the server apparatus 30 (step S410). The server apparatus 30 transmits, to the client apparatus 10-2, the data packets "DATA" stored in the communication queue with setting of the transmission priority (step S411).

The data packet "OK" including a response message stored at the third communication memory 3680 is transmitted in prioritized fashion to the client apparatus 10-1 by the server apparatus 30 (step S412). The length of time from step S410 to step S412 is indicated by the length of an arrow 4003. The server apparatus 30 transmits, to the client apparatus 10-2, the data packets "DATA" stored in the communication queue with setting of the transmission priority (step S413).

The server apparatus 30 transmits, to the client apparatus 10-3, the untransmitted data packets "DATA" stored in the communication queue with setting of the transmission priority (step S414). The server apparatus 30 transmits, to the client apparatus 10-1, the untransmitted data packets "DATA" stored in the communication queue with setting of the transmission priority (step S415).

As shown in FIG. 5, when the server apparatus 30 transmits packets with setting of the transmission priority of the transmit data, it is possible to reduce the control packet delay. The delay in transmission of the data packet "OK" including a response message as indicated by the length of the arrow 4002 in FIG. 5 is reduced as compared with the time indicated by the length of the arrow 4000 shown in FIG. 4. Furthermore, the delay in transmission of the data packet "OK" including a response message as indicated by the length of the arrow 4003 is reduced as compared with the time indicated by the length of the arrow 4001 shown in FIG. 4.

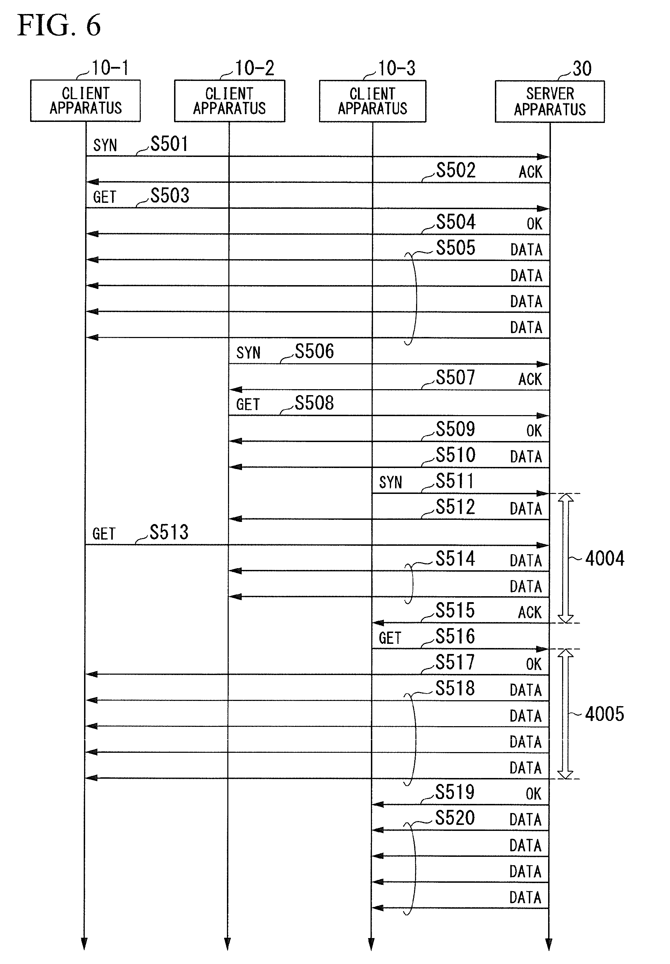

FIG. 6 is a sequence diagram showing an exemplary communication in accordance with an embodiment in which connections are established in a situation in which the transmission priority of the transmit data is not set by the communicator 360. There are situations in which the server apparatus 30 might engage in the TCP/IP communication with a plurality of the client apparatuses 10. At FIG. 6, the server apparatus 30 carries out the TCP/IP communication with the client apparatuses 10-1 through 10-3. Examples of the communication in accordance with the HyperText Transfer Protocol (HTTP) shown in FIG. 6 include the transmission of the control packet "SYN", the transmission of the control packets "GET", and transmission of the data packets "DATA" corresponding to those the control packets "GET", by the server apparatus 30.

The client apparatus 10-1 transmits the control packet "SYN" to the server apparatus 30 (step S501). The server apparatus 30 transmits, to the client apparatus 10-1, the response message "ACK" responsive to the control packet "SYN" (step S502).

The client apparatus 10-1 transmits the control packet "GET" to the server apparatus 30 (step S503). The server apparatus 30 transmits, to the client apparatus 10-1, the data packet "OK" including a response message responsive to the control packet "GET" (step S504). The server apparatus 30 transmits, to the client apparatus 10-1, the data packets "DATA" corresponding to the control packet "GET" (step S505).

At FIG. 6, neither the client apparatus 10-2 nor the client apparatus 10-3 transmits packets to the server apparatus 30 during the period from step S501 to step S505. For this reason, the server apparatus 30 is able to transmit the data packets "DATA" to the client apparatus 10-1 without delay.

The client apparatus 10-2 transmits the control packet "SYN" to the server apparatus 30 (step S506). The server apparatus 30 transmits, to the client apparatus 10-2, the response message "ACK" responsive to the control packet "SYN" (step S507).

The client apparatus 10-2 transmits the control packet "GET" to the server apparatus 30 (step S508). The server apparatus 30 transmits, to the client apparatus 10-2, the data packet "OK" including a response message responsive to the control packet "GET" (step S509). The server apparatus 30 transmits, to the client apparatus 10-2, the data packets "DATA" corresponding to the control packet "GET" (step S510).

FIG. 6 shows a situation in which, following the transmission of the data packets "DATA" by the server apparatus 30 at step S510, the client apparatus 10-3 transmits the control packet "SYN" to the server apparatus 30 when untransmitted data packets remain in the communication queue (step S511). The server apparatus 30 continues to transmit, to the client apparatus 10-2, the data packets "DATA" stored in the communication queue without setting of the transmission priority (step S512).

FIG. 6 shows a situation in which, following the transmission of the data packets "DATA" by the server apparatus 30 at step S512, the client apparatus 10-1 transmits the control packet "GET" to the server apparatus 30 when the untransmitted data packets remain in the communication queue (step S513). The server apparatus 30 continues to transmit, to the client apparatus 10-2, the data packets "DATA" stored in the communication queue without setting of the transmission priority (step S514). In the event that transmission to the client apparatus 10-2 of the data packets "DATA" stored in the communication queue is completed, the server apparatus 30 transmits, to the client apparatus 10-3, the response message "ACK" corresponding to the control packet "SYN" (step S515). The length of time from step S511 to step S515 is indicated by the length of an arrow 4004.

The client apparatus 10-3 transmits the control packet "GET" to the server apparatus 30 (step S516). The server apparatus 30 transmits, to the client apparatus 10-1, the data packet "OK" including a response message responsive to the control packet "GET" (step S517). The server apparatus 30 transmits, to the client apparatus 10-1, the data packets "DATA" corresponding to the control packet "GET" (step S518).

The server apparatus 30 transmits, to the client apparatus 10-3, the data packet "OK" including a response message responsive to the control packet "GET" (step S519). The length of time from step S516 to step S519 is indicated by the length of an arrow 4005. The server apparatus 30 transmits, to the client apparatus 10-3, the data packets "DATA" corresponding to the control packet "GET" (step S520).

As shown in FIG. 6, when the server apparatus 30 transmits packets without setting of the transmission priority of the transmit data, situations can arise in which the transmission of the control packets is delayed. At FIG. 6, between step S511 and step S515, there is occurrence of a delay in the transmission of the data packet "OK" including a response message. Furthermore, between step S516 and step S519, there is occurrence of a delay in the transmission of the data packet "OK" including a response message.

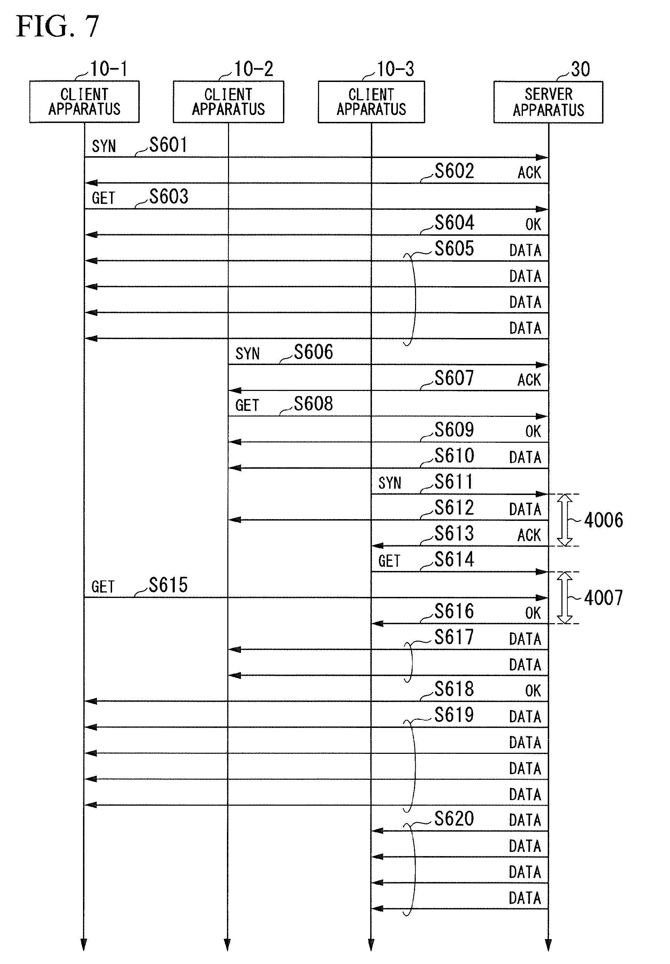

FIG. 7 is a sequence diagram showing an exemplary communication in accordance with an embodiment in which connections are established in a situation in which the transmission priority of the transmit data is set by the communicator 360. At FIG. 7, the control packets are stored at the third communication memory 3680. At FIG. 7, the packets stored at the third communication memory 3680 are transmitted in prioritized fashion by the server apparatus 30.

Step S601 through step S612 are similar to step S501 through step S512 shown in FIG. 6. The response message "ACK" stored at the third communication memory 3680 is transmitted in prioritized fashion to the client apparatus 10-3 by the server apparatus 30 (step S613). The length of time from step S611 to step S613 is indicated by the length of an arrow 4006. The client apparatus 10-3 transmits the control packet "GET" to the server apparatus 30 (step S614).

FIG. 7 shows a situation in which, following the transmission of the data packets "DATA" by the server apparatus 30 at step S612, the client apparatus 10-1 transmits the control packet "GET" to the server apparatus 30 when the untransmitted data packets remain in the communication queue (step S615). The server apparatus 30 transmits, to the client apparatus 10-3, the data packet "OK" including a response message responsive to the control packet "GET" (step S616). The length of time from step S614 to step S616 is indicated by the length of an arrow 4007.

The server apparatus 30 transmits, to the client apparatus 10-2, the untransmitted the data packets "DATA" stored in the communication queue with setting of the transmission priority (step S617). The server apparatus 30 transmits, to the client apparatus 10-1, the data packet "OK" including a response message responsive to the control packet "GET" (step S618).

The server apparatus 30 transmits, to the client apparatus 10-1, the untransmitted data packets "DATA" stored in the communication queue with setting of the transmission priority (step S619). The server apparatus 30 transmits, to the client apparatus 10-3, the untransmitted data packets "DATA" stored in the communication queue with setting of the transmission priority (step S620).

As shown in FIG. 7, when the server apparatus 30 transmits packets with setting of the transmission priority of the transmit data, it is possible to reduce the control packet delay. The delay in transmission of the data packets "OK" including a response message as indicated by the length of the arrow 4006 in FIG. 7 is reduced as compared with the time indicated by the length of the arrow 4004 shown in FIG. 6. Furthermore, the delay in transmission of the data packet "OK" including a response message as indicated by the length of the arrow 4007 is reduced as compared with the time indicated by the length of the arrow 4005 shown in FIG. 6. At FIG. 4 through FIG. 7, note that a description of retransmission of packets in correspondence to wait times has been omitted.

As described above, the communicator 360 (communication apparatus) in accordance with an embodiment has the determiner 3600, the fourth protocol processor 3610 through the ninth protocol processor 3670, and the physical interface 3690. The determiner 3600 sets the transmission priority for transmitting the transmit data in accordance with the size of the transmit data which is data transmitted to the client apparatus 10. The fourth protocol processor 3610 through the ninth protocol processor 3670 generate the packets including the transmit data based on the predetermined protocols. The physical interface 3690 transmits the packets including the transmit data in accordance with priorities set for the transmit data.

Such constitution makes it possible for the determiner 3600 to set the transmission priority of the transmit data in accordance with the size of the transmit data which is data transmitted to the client apparatus 10. The determiner 3600 causes the packets including the transmit data of small size to be stored at the third communication memory 3680 by way of the fourth protocol processor 3610 through the ninth protocol processor 3670. In other words, the determiner 3600 causes the control packet which is smaller in size than the data packet to be stored at the third communication memory 3680. The control packet stored at the third communication memory 3680 is transmitted to the client apparatus 10 in prioritized fashion by the physical interface 3690. This makes it possible for the communicator 360 in accordance with the embodiment to improve a communication performance.

Where there are many client apparatuses 10, or where many packets are to be transmitted at once, it can take a relatively long time before the control packet indicative of a response is transmitted. In such a situation, because the client apparatus 10 may determine that the transmitted packet have been lost, the packet will be retransmitted. When the packet is retransmitted, load on the communication network 20 will increase. In such a situation, it will be possible for the communicator 360 in accordance with the embodiment to further improve the communication performance.

Even where the communication network 20 and/or the client apparatus 10 do not support QoS (Quality of Service), it will be possible for the communicator 360 in accordance with the embodiment to improve the communication performance. The communicator 360 in accordance with the embodiment is able to improve the communication performance without the need for the controller 320 to switch between or among types of the communication processing employed for packets depending on application software. The communicator 360 in accordance with the embodiment is such that the controller 320 does not need to know the state of transmission of packets with respect to which load has been reduced by means of the hardware processing by the communicator 360.

In at least one embodiment described above, the communication performance can be improved by through use of the determiner 3600 that sets the transmission priority of the transmit data in accordance with the size of the transmit data.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A communication apparatus comprising:
a determiner that sets a transmission priority for transmitting transmit data to a first apparatus in accordance with a size of the transmit data;
a protocol processor that generates a packet including the transmit data based on a predetermined protocol; and
a physical interface that transmits the packet including the transmit data in accordance with the transmission priority which was set for the transmit data.

2. The communication apparatus according to claim 1, wherein the determiner gives a higher transmission priority to the transmit data having a smaller size.

3. The communication apparatus according to claim 2, wherein there are higher and lower levels of the transmission priority,
the transmit data includes a control information used for control, and
the determiner gives the higher level of the transmission priority to the control information in a case where the control information has a size which is less than a threshold value.

4. The communication apparatus according to claim 1, wherein the determiner determines the level of the transmission priority of the transmit data based on whether the transmit data is data or not.

5. The communication apparatus according to claim 1, wherein the physical interface receives, from the first apparatus, a first packet including a message requesting communication between the communication apparatus and the first apparatus, and the physical interface transmits, to the first apparatus, a second packet including a response message responsive to the first packet.

6. The communication apparatus according to claim 5, wherein the physical interface transmits, to the first apparatus, a third packet which is a data packet after transmitting the second packet including the response message.

7. The communication apparatus according to claim 1, wherein the physical interface receives, from the first apparatus, a fourth packet including data for establishing communication connection, and the physical interface transmits, to the first apparatus, a fifth packet including a response message responsive to the fourth packet.

8. The communication apparatus according to claim 7, wherein the physical interface transmits, to the first apparatus, a sixth packet which is a data packet after transmitting the fifth packet including the response message.

9. A transmitting method comprising:
setting, by a determiner, a transmission priority for transmitting transmit data to a first apparatus in accordance with a size of the transmit data;
generating, by a protocol processor, a packet including the transmit data based on a predetermined protocol; and
transmitting, by a physical interface, the packet including the transmit data in accordance with the transmission priority which was set for the transmit data.

10. The transmitting method according to claim 9, further comprising:
giving, by the determiner, a higher transmission priority to the transmit data having a smaller size.

11. The transmitting method according to claim 10, wherein there are higher and lower levels of the transmission priority,
the transmit data includes a control information used for control, and
the transmitting method further comprises:
giving, by the determiner, the higher level of the transmission priority to the control information in a case where the control information has a size which is less than a threshold value.

12. The transmitting method according to claim 9, further comprising:
determining, by the determiner, the level of the transmission priority of the transmit data based on whether the transmit data is data or not.

13. The transmitting method according to claim 9, further comprising:
receiving, by the physical interface, from the first apparatus, a first packet including a message requesting communication between the communication apparatus and the first apparatus; and
transmitting, by the physical interface, to the first apparatus, a second packet including a response message responsive to the first packet.

14. The transmitting method according to claim 13, further comprising:
transmitting, by the physical interface, to the first apparatus, a third packet which is a data packet after transmitting the second packet including the response message.

15. The transmitting method according to claim 9, further comprising:
receiving, by the physical interface, from the first apparatus, a fourth packet including data for establishing communication connection; and
transmitting, by the physical interface, to the first apparatus, a fifth packet including a response message responsive to the fourth packet.

16. The transmitting method according to claim 15, further comprising:
transmitting, by the physical interface, to the first apparatus, a sixth packet which is a data packet after transmitting the fifth packet including the response message.
